# EUROPEAN PATENT SPECIFICATION

(11) **EP 3 204 474 B1**
(45) Date of publication and mention of the grant of the patent: **26.12.2018**
(21) Application number: 15775209.8
(22) Date of filing: 06.10.2015
(51) Int. Cl.: C10L 1/06, B60W 10/06, B60W 20/00

(54) **FUEL COMPOSITION HAVING LOW VAPOUR PRESSURE**
BRENNSTOFFZUSAMMENSETZUNG MIT NIEDRIGEM DAMPFDRUCK
COMPOSITION DE CARBURANT PRÉSENTANT UNE FAIBLE PRESSION DE VAPEUR

(30) Priority: 06.10.2014 EP 14187819
(43) Date of publication of application: 16.08.2017
(73) Proprietor: Shell Internationale Research Maatschappij B.V., 2596 HR The Hague (NL)
(72) Inventor: ORLEBAR, Caroline Nicola, Manchester M220RR (GB); WILSON, Glenn John, Chester CH2 4NU (GB)
(74) Representative: Shell Legal Services IP
(86) International application number: PCT/EP2015/073026
(87) International publication number: WO 2016/055461

(56) References cited:
- EP-A1- 1 589 091
- US-A1- 2003 158 454
- US-A1- 2009 229 175

## Description

### Field

The invention is in the field of fuel formulations, particularly gasoline-type fuel formulations.

### Background

The rising costs of hydrocarbon-based fuels and increasing concern about the environmental effects of carbon dioxide emissions have resulted in a growing demand for motor vehicles that operate either partly or entirely on electrical energy.

Hybrid Electric Vehicles (HEV) make use of both electrical energy stored in re-chargeable batteries and the mechanical energy converted from fuel, usually hydrocarbon based, by a conventional internal combustion engine (ICE). The batteries are charged during driving operation by the ICE and also by recovering kinetic energy during deceleration and braking. This process is offered by a number of vehicle original equipment manufacturers (OEMs) for some of their vehicle models. HEVs typically provide a normal driving experience, with the principle advantage of improved fuel consumption in comparison to conventional ICE only vehicles. Plug-in Hybrid Electric Vehicles (PHEVs) have similar functionality to HEVs, but in this application the battery can also be connected to the mains electrical system for recharging when the vehicle is parked. PHEVs typically have larger battery packs than HEV which affords some all-electric range capability. Dynamic driving will use electric power and ICE, though the area of operation using an internal combustion engine (ICE) for propulsion may be restricted to cruising and intercity driving. Consequently the fuel appetite of vehicles may well be different from that required currently for conventional ICE or HEV equipped vehicles. For vehicles based exclusively in an urban environment, the increased EV mode capacity and plug-in charging function further reduce the level of ICE activity. This can lead to significantly extended residence time for the fuel tank contents compared to HEV and conventional ICE vehicles.

Conventional ICE vehicles deliver about 600 km (400 miles) range for a propulsion system weight of about 200 kg and require a re-fill time of around 2 minutes. In comparison, it is considered that a battery pack based on current LiON technology that could offer comparable range and useful battery life would weigh about 1700 kg. The additional weight of the motor, power electronics and vehicle chassis would result in a much heavier vehicle than the conventional ICE equivalent.

In a conventional ICE vehicle, the engine torque and power delivery from the engine must cover the full range of vehicle operating dynamics. However, the thermodynamic efficiency of an internal combustion cannot be fully optimised across a wide range of operating conditions. The ICE has a relatively narrow dynamic range. Electrical machines on the other hand can be designed to have a very wide dynamic range, e.g. are able to deliver maximum torque at zero speed. This control flexibility is well recognised as a useful feature in industrial drive applications and offers potential in automotive applications. Within their operating envelope, electrical machines can be controlled using sophisticated electronics to give very smooth torque delivery, tailored to the demand requirements. However it may be possible to provide different torque delivery profiles that are more appealing to drivers. Hence this is likely to be an area of interest going forward for automotive designers. At higher speeds, electrical drive systems tend to be limited by the heat rejection capacity of the power electronics and the cooling system for the electric motor itself. Additional considerations for high torque motors at high speeds are associated with the mass of the rotating components, where very high centrifugal forces can be produced at high speeds. These can be destructive. In HEVs and PHEVs, the electric motor is therefore able to provide only some of the dynamic range. However, this can allow the efficiency of the ICE to be optimised over a narrower range of operation. This offers some advantages in terms of engine design.

Hence, current hydrocarbon fuels developed for a full range ICE may not be optimised or indeed beneficial for HEV or PHEV ICE units. Fuels have been formulated and regulated for conventional ICE vehicles for many years and may therefore be considered to have stabilised, with degrees of freedom in the formulation space well understood. The relatively recent introduction of hybrid technology presents an opportunity to consider the fuel formulation space from an entirely new perspective.

US2009/229175 discloses a fuel for homogeneous charge compression ignition (HCCI) engines. Reid vapour pressure of 30kPa or higher and 65kPa or lower are cited.

US2003/158454 discloses a gasoline composition for use in a fuel cell comprising a mixture of hydrocarbons and wherein the composition exhibits a vapour pressure of 29.9 kPa or 30.0 kPa, 41 kPa or 39 kPa. At paragraph [0079] the fuel cell system is used in a hybrid automobile.

EP-A-1589091 relates to a motor fuel for spark ignition internal combustion engines and a method for lowering the dry vapour pressure equivalent (DVPE) of a fuel composition including a hydrocarbon liquid and ethanol by using an oxygen-containing additive.

### Summary

The invention relates to the finding that for hybrid electric vehicles (HEVs), and PHEVs in particular, a fuel of low vapour pressure did not compromise cold starting ability, also showed improvement in fuel consumption and power.

The present invention provides a use of a liquid hydrocarbon composition that exhibits a vapour pressure of greater than around 25 kPa and below around 50 kPa for improving fuel consumption in a plug-in hybrid electric vehicle.

### Drawings

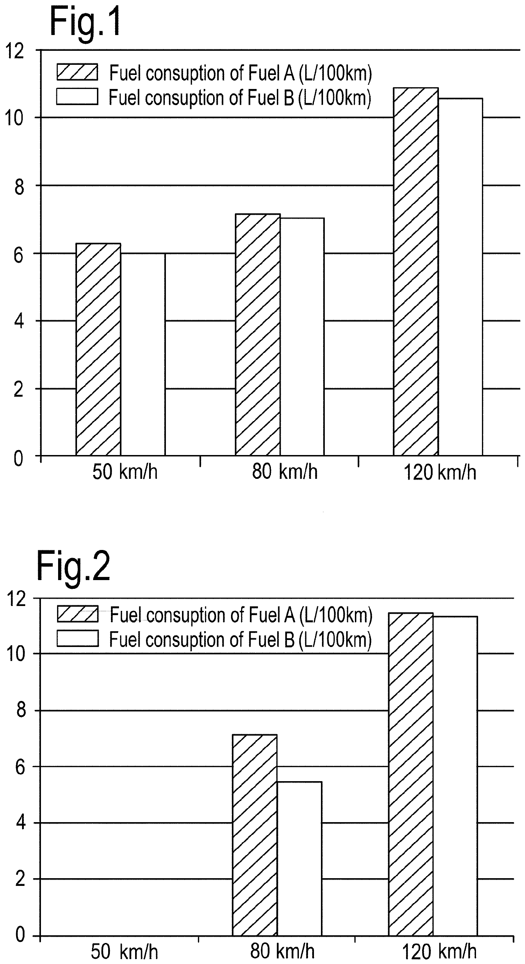

Embodiments of the invention are illustrated by the accompanying drawings in which Figure 1 shows a bar chart that provides the results of a comparative test for fuel consumption at three running speeds between two fuels (fuels A and B) performed in a conventional ICE equipped car;

Figure 2 shows a bar chart that provides the results of a comparative test for fuel consumption at three running speeds between two fuels (fuels A and B) performed in a PHEV equipped car.

### Detailed Description

Disclosed herein is a modified fuel composition for PHEVs and HEVs that comprises fewer volatile components, thus exhibiting a lower vapour pressure, than currently specified for conventional spark ignition ICE vehicles. The term "comprises" as used herein is intended to indicate that as a minimum the recited components are included but that other components that are not specified may also be included as well.

Without being bound by theory, it is believed that the inventors' findings may be result from the fact that lighter more volatile components of gasoline fuels are less critical to cold starting performance in HEVs because electrical energy may be used to assist vaporisation of the fuel for the initial ICE start. Indeed, for PHEVs where considerable proportion of journeys are expected to be completed using electric power only, the residence time for fuels in the tank may be extended, resulting in some losses in 'light ends'. By reducing the volatiles content of a fuel, the present invention provides a considerable economic saving as fuel formulations for HEV and PHEVs do not require the more expensive light end components. This also allows for better utilisation of hydrocarbon resources where valuable lighter volatile components may be diverted away from fuel use and towards chemical synthetic processes. In addition, the invention provides for a more compositionally stable fuel composition that does not change considerably in hydrocarbon content over time.

Suitable liquid hydrocarbon fuels of the gasoline boiling range are mixtures of hydrocarbons having a boiling range of from about 25° C to about 232° C. However, in view of the reduced volatiles content, the fuel compositions herein may be expected to display a higher than expected initial boiling point (IBP) than that of a conventionally formulated gasoline blend. In a specific embodiment disclosed herein, the IBP is at least 30° C, optionally at least 33° C, suitably at least 35° C. In a specific embodiment disclosed herein the fuel composition the IBP is greater than 38° C.

The fuel compositions herein comprise mixtures of saturated hydrocarbons, olefinic hydrocarbons and aromatic hydrocarbons. Preferred are gasoline mixtures having a saturated hydrocarbon content ranging from about 40% to about 80% by volume, suitably in excess of 50% by volume, an olefinic hydrocarbon content from 0% to about 30% by volume and an aromatic hydrocarbon content from about 10% to about 60% by volume. The base fuel is derived from straight run gasoline, polymer gasoline, natural gasoline, dimer and trimerized olefins, synthetically produced aromatic hydrocarbon mixtures, or from catalytically cracked or thermally cracked petroleum stocks, and mixtures of these. The octane level, (RON+MON)/2, will generally be above about 85. Conventional motor fuel bases can be employed in the practice of the present invention. For example, hydrocarbons in the gasoline can be replaced by up to a substantial amount of conventional alcohols or ethers, conventionally known for use in fuels. The base fuels are desirably substantially free of water since water could impede a smooth combustion.

Normally, the hydrocarbon fuel mixtures to which the invention is applied are substantially lead-free, but may contain minor amounts of blending agents such as methanol, ethanol, ethyl tertiary butyl ether, methyl tertiary butyl ether, tert-amyl methyl ether and the like, at from about 0.1% by volume to about 15% by volume of the base fuel, although larger amounts may be utilized. The fuels can also contain conventional additives including antioxidants such as phenolics, e.g., 2,6-di-tertbutylphenol or phenylenediamines, e.g., N,N'-di-sec-butyl-p-phenylenediamine, dyes, metal deactivators, dehazers such as polyester-type ethoxylated alkylphenol-formaldehyde resins. Corrosion inhibitors, such as a polyhydric alcohol ester of a succinic acid derivative having on at least one of its alpha-carbon atoms an unsubstituted or substituted aliphatic hydrocarbon group having from 20 to 50 carbon atoms, for example, pentaerythritol diester of polyisobutylene-substituted succinic acid, the polyisobutylene group having an average molecular weight of about 950, in an amount from about 1 ppm (parts per million) by weight to about 1000 ppm by weight, may also be present.

The fuel compositions herein are characterised by having lower volatility compared to standard specification fuels, for example fuels that meet the EN228 specification. In other words, the fuels herein comprise fewer volatile components and thereby exhibit a lower vapour pressure when compared to conventional standard gasoline fuel mixtures. The acceptable vapour pressure (kPa) of gasolines that meet the EN228 fuel standard falls between 45.0 kPa and 110.0 kPa. According to an embodiment disclosed herein, the fuel composition exhibits a vapour pressure of below around 50.0 kPa, suitably below 45.0 kPa, more suitably below 42.5 kPa, and optionally below 40.0 kPa. In a specific embodiment disclosed herein the gasoline has a vapour pressure around 38 kPa. Typically the gasoline herein has a vapour pressure than does not fall below around 25 kPa suitably not below 27.5 kPa, more suitably at least 30 kPa, optionally at least 32.5kPa, more optionally at least 35 kPa. The term "around" when applied to a given value is understood to encompass variations within a reasonable margin of error or to the extent that values either side of the stated value that demonstrate a high level of functional equivalence are also included.

An advantage of the present invention is that the requirement to utilise less volatile components in the fuel blend means that the isoparaffin content may be increased above a level normally associated with gasoline compositions. In a specific embodiment disclosed herein the isoparaffin content may be in excess of 35% by volume, suitably greater than 40% volume, and optionally more than 42% by volume, wherein the volume relates to the total volume of the fuel composition. By increasing the utilisation of isoparaffins over n-paraffins the gasoline compositions herein will also demonstrate higher RON, thereby requiring fewer expensive octane boosting additive components to be added.

The invention is further described by reference to the following non-limiting example.

### Example

The present Example tests cold starting ability, fuel consumption, power output and acceleration performance in a PHEV compared to a conventional ICE vehicle. The Examples use standard EN 228 compliant gasoline (Comparison - Fuel A) versus a test gasoline composition (Experiment - Fuel B) which has been adjusted to show a lower volatility than standard EN 228 gasoline. The properties of the Comparison and Experiment fuels are set out in Table 1.

**Table 1 Fuel Properties**

| | | EN228 Specification | | Comparison Fuel A | Experiment Fuel B |
|---|---|---|---|---|---|
| | | Min | Max | | |
| RON | - | 95 | - | 96.5 | 96.1 |
| MON | - | 85 | - | 85.4 | 86.5 |
| Density @ 15°C | g/cm³ | 0.720 | 0.775 | 0.7390 | 0.7523 |
| IBP | °C | - | - | 26.0 | 39.9 |
| FBP | °C | - | 210.0 | 200.9 | 192.3 |
| E70 | % vol | 20.0 | 48.0 | 33.5 | 11.8 |
| E100 | % vol | 46.0 | 71.0 | 52.9 | 45.6 |
| E150 | % vol | 75.0 | - | 84.9 | 88.6 |
| VP | kPa | 45.0 | 110.0 | 94.9 | 38.3 |
| GC | | | | | |
| C | - | - | - | 6.48 | 7.03 |
| H | - | - | - | 11.64 | 12.66 |
| O | - | - | - | 0.00 | 0.00 |
| C | %m | - | - | 87.00 | 86.95 |
| H | %m | - | - | 13.02 | 13.05 |
| O | %m | - | 2.7 or 3.7 | 0.00 | 0.00 |
| Paraffins | % vol | - | - | 12.28 | 7.73 |
| Isoparaffins | % vol | - | - | 33.52 | 44.30 |
| Olefins (incl. dienes) | % vol | - | - | 15.21 | 7.87 |
| Dienes | % vol | - | - | 0.13 | 0.02 |
| Naphthenes | % vol | - | - | 3.07 | 4.16 |
| Aromatics | % vol | - | - | 34.62 | 34.91 |
| Oxygenates | % vol | - | - | 0.00 | 0.00 |
| Unknowns | % vol | - | - | 1.30 | 1.03 |
| Total | % vol | - | - | 100.0 | 100.0 |
| AFR (stoich) | - | - | - | 14.46 | 14.46 |
| Gr. Ent. Com (g) | MJ/kg | - | - | -43.30 | -42.89 |
| Vol. Ent. Com. (g) | MJ/L | - | - | -31.9987 | -32.2661 |
| Gr. Ent. Com. (1) | MJ/kg | - | - | -43.000 | -43.258 |
| Vol. Ent. Com. (1) | MJ/L | - | - | -31.777 | -32.543 |
| Heat of vaporisation | MJ/kg | - | - | 0.371 | -0.370 |
| Cal. H/C ratio | - | - | - | 1.796 | 1.80 |
| Cal. O/C ratio | - | - | - | 0.000 | 0.000 |
| CWF | - | - | - | 0.8690 | 0.8687 |

The reference fuel (fuel A) was a standard unleaded gasoline with an octane quality of RON 96.5 that met the current EN228 specification and was similar to a conventional main grade gasoline fuel. This fuel acted as the baseline for comparison. The Experiment fuel (fuel B) represented a "stored" PHEV fuel. It had an adequate octane quality of RON 96.1, but its volatility metrics E70, E100 and VP were below the current EN228 specification.

### Vehicles

A 2008 Toyota Prius 1.5 T4 HEV that was converted by Amberjac™ to have plug-in charging capability was selected for test as a representative PHEV. This was compared to a standard 2004 Volkswagen Golf 1.6 FSI powered by conventional spark ignition, direct fuel injection, internal combustion engine (ICE) technology. The ICEs in both vehicles operated using a four-stroke cycle with variable valve timing.

### Cold Start Testing

The test conditions for cold start are set out in Table 2.

**Table 2 Cold Start Test**

| Test | Definition |
|---|---|
| Warm-up | Cruise 30 min 100 km/h Top-1 RLS, tank fuel (Std ULG95 Maingrade) |
| Select Fuel | Connect test fuel to external fuel lines |
| Purge | Flush 5 litres with test fuel, Cruise 30-mins 100 km/h Top-1 RLS |
| Soak | O/night soak at 5° C in CD5 Fuel to be soaked over-night in cell. |
| Cold-Start | Cold-cranking test Record: Vbatt/Time, No. Attempts Max 5 attempts |

Contrary to expectations, Fuel B exhibited no cold-start problems at 5° C when used in the PHEV engine or the ICE engine.

### Performance Assessment

An important consideration for fuel formulations is the potential for any fuel derived performance benefits or demerits. These are most often determined by operating the vehicle (or engine) at full load during accelerating and/or steady conditions. The conditions for assessing the acceleration performance and also the power are set out in Table 3.

**Table 3 Performance Testing**

| Test | Definition |
|---|---|
| Warm up | 100 km/h, road-load, 15 minutes, Tank Fuel |
| Select Fuel | Connect test fuel to external fuel lines |
| Purge/Precon | Cruise, Drive or Top-1, 90 km/h, road-load, 15mins |
| | 5x WOT Accel in Drive or Top-1, 50-100 km/h |
| Acceleration Test | 5x WOT in Drive Mode or Top-1 30-50 km/h* |
| | 50-80 km/h |
| | 80-120 km/h |
| Power Test | WOT at 50, 80, 120 km/h in D or Top-1 |
| | 5s stabilisation, 5s measurement |
| | Pause 60 s idle |
| | Repeat twice (three measurements at each step) Record, Power (kW), Tractive Force (N), Speed (km/h dyno) |

The when used in both the ICE and the PHEV Experimental test fuel B resulted in consistently improved fuel consumption across all cruising speeds (see Figures 1 and 2). It should be noted that fuel consumption in the PHEV at a speed of 50 kph is indicated as zero because the vehicle was operating solely under electrical power at this speed (see Figure 2).

Surprisingly, it was found that fuel B showed more than 1% improvement in fuel consumption at a steady state (120 km/h) compared to the standard comparison fuel (fuel A) when used in the PHEV. This is significant because at this speed the PHEV is operating only using its ICE. Even more surprising was that the reduced fuel consumption in the ICE vehicle at 120 km/h was even higher at just under 3% (see Figure 1).

The following tables outline the results for cold start new European driving cycle (NEDC) and warm start steady state at 120 km/h alongside a notional prediction based upon the common general knowledge before the tests were run.

**Table 4**

| | Fuel consumption compared to Comp. fuel | |
|---|---|---|
| | PHEV | ICE |
| Prediction | No change | No change |
| Result NEDC | Better by 4.4% | Better by 2.4% |
| Result 120 km/h | Better by 1.2% | Better by 2.8% |

The results show that using a low vapour pressure fuel was no disadvantage to either vehicle and showed some benefits to fuel economy. Hence, the invention provides for utilisation of fuels having vapour pressures lower than specified in established international standards (for instance EN228)in ICEs in general, and more suitably within ICEs comprised within the powertrain of a hybrid electric vehicle.

Although particular embodiments of the invention have been disclosed herein in detail, this has been done by way of example and for the purposes of illustration only. The aforementioned embodiments are not intended to be limiting with respect to the scope of the appended claims.

## Claims

1. Use of a liquid hydrocarbon composition that exhibits a vapour pressure of greater than around 25 kPa and below around 50.0 kPa for improving fuel consumption in a plug-in hybrid electric vehicle.

## Patentansprüche

1. Verwendung einer flüssigen Kohlenwasserstoffzusammensetzung, die einen Dampfdruck von mehr als etwa 25 kPa und unter etwa 50,0 kPa aufweist, zur Verbesserung des Kraftstoffverbrauchs in einem Plug-in-Hybrid-Elektrofahrzeug.

## Revendications

1. Utilisation d'une composition liquide d'hydrocarbures qui présente une pression de vapeur supérieure à environ 25 kPa et inférieure à environ 50,0 kPa pour améliorer la consommation de carburant dans un véhicule électrique hybride rechargeable.
